# FASCICULE DE BREVET EUROPEEN

(11) **EP 3 331 654 B1**
(45) Date de publication et mention de la délivrance du brevet: **22.05.2019**
(21) Numéro de dépôt: 17765209.6
(22) Date de dépôt: 28.07.2017
(51) Int. Cl.: B06B 1/16, F03G 3/06

(54) **MECANISME OSCILLATOIRE A CENTRIFUGATIONS CROISEES SIMULTANEES, MACHINE ET PROCEDE DE MISE EN OEUVRE**
OSZILLIERENDER MECHANISMUS MIT GLEICHZEITIGEN QUERZENTRIFUGALKRÄFTEN, MASCHINE UND VERFAHREN ZUR VERWENDUNG DAVON
OSCILLATING MECHANISM WITH SIMULTANEOUS CROSS CENTRIFUGAL FORCES, MACHINE AND METHOD FOR USING SAME

(30) Priorité: 28.03.2017 WO PCT/FR2017/050704
(43) Date de publication de la demande: 13.06.2018
(73) Titulaire: Granger, Maurice, Albufeira 8200-385 (PT)
(72) Inventeur: Granger, Maurice, Albufeira 8200-385 (PT)
(74) Mandataire: Cabinet Laurent & Charras
(86) Numéro de dépôt international: PCT/FR2017/052134
(87) Numéro de publication internationale: WO 2018/069586

(56) Documents cités:
- GB-A- 2 104 187
- US-A- 646 419
- US-A- 4 241 615
- US-A- 4 285 405
- US-A- 4 424 718
- US-A- 4 856 358
- US-A- 5 042 313

## Description

La présente invention concerne un mécanisme oscillatoire à centrifugations croisées simultanées, permettant de récupérer de l'énergie, pour toute application envisageable.

L'invention concerne également une machine, pour la production d'énergie ou toute autre application, comprenant au moins un tel mécanisme. Par exemple, la machine peut être un moteur, un générateur ou un mélangeur. L'invention concerne en particulier une machine de production d'énergie, comprenant de préférence plusieurs mécanismes couplés en parallèle et/ou en série.

L'invention concerne enfin un procédé de mise en oeuvre d'un tel mécanisme.

Dans le domaine mécanique, il existe de nombreux mécanismes de transmission mouvement, tels que des trains épicycloïdaux ou des vilebrequins, adaptés pour équiper des machines pour la production d'énergie ou toute autre application. Toutefois, les rendements obtenus avec les mécanismes connus ne sont pas entièrement satisfaisants.

Le Demandeur a mis au point plusieurs mécanismes à récupération d'énergie, tel que le mécanisme équilibré décrit dans la demande WO2017064379.

Le document US5042313 décrit un autre mécanisme, comprenant un socle (4) ; un balancier (10) monté basculant par rapport au socle autour d'un axe de balancier (11) ; un premier élément excentrique (31) générant un premier moment de force de pesanteur autour d'un premier axe (32) ; un second élément excentrique (41) générant un second moment de force de pesanteur autour d'un second axe (42) ; et un système de synchronisation (8) du premier élément excentrique et du second élément excentrique selon un mouvement de rotation synchronisée contrarotative. L'axe de balancier (11) et les axes (32 ; 42) des éléments excentriques (31 ; 32) sont parallèles. Les axes (32 ; 42) des éléments excentriques (31 ; 41) sont supportés par le balancier (10). Lorsque le mécanisme est en fonctionnement, les éléments excentriques (31 ; 41) sont mobiles en rotation synchronisée contrarotative, avec centrifugations croisées. Le balancier (10) bascule en alternance d'un côté puis de l'autre, en amplifiant le mouvement de rotation des éléments excentriques (31 ; 41), par poussées croisées simultanées du balancier (10) sur les axes (32 ; 42) desdits éléments excentriques (31 ; 41), et par transmission de couple au système de synchronisation.

Le but de la présente invention est de proposer de nouveaux mécanismes permettant de récupérer de l'énergie et d'améliorer le rendement d'une machine.

A cet effet, l'invention a pour objet un mécanisme conformé à la revendication 1. Le mécanisme comprend : un socle ; un balancier monté basculant par rapport au socle autour d'un axe de balancier ; un premier élément excentrique générant un premier moment de force de pesanteur autour d'un premier axe ; un second élément excentrique générant un second moment de force de pesanteur autour d'un second axe ; et un système de synchronisation du premier élément excentrique et du second élément excentrique selon un mouvement de rotation synchronisée contrarotative ; dans lequel : l'axe de balancier et les axes des éléments excentriques sont parallèles et disposés dans un même plan solidaire du balancier ; les axes des éléments excentriques sont supportés par le balancier ; et lorsque le mécanisme est en fonctionnement :
- les axes des éléments excentriques sont supportés par le balancier, respectivement en dessus et en dessous de l'axe de balancier ;
- les éléments excentriques sont mobiles en rotation synchronisée contrarotative, avec centrifugations croisées,
- le balancier bascule en alternance d'un côté puis de l'autre, en amplifiant le mouvement de rotation des éléments excentriques, par poussées croisées simultanées du balancier sur les axes desdits éléments excentriques, et par transmission de couple au système de synchronisation, et
- l'énergie générée par centrifugation au sein du mécanisme est récupérable en couplant un système de récupération d'énergie au système de synchronisation.

Ainsi, l'invention permet de générer de l'énergie, grâce aux forces de centrifugation croisées résultant des mouvements des éléments excentriques et des mouvements du balancier.

Les forces centrifuges générées par les éléments excentriques apportent l'énergie nécessaire pour leur entraînement en rotation. Plus les forces centrifuges augmentent, plus cette rotation est facilitée.

Le basculement du balancier permet de décupler les forces centrifuges générées par les éléments excentriques.

Selon d'autres caractéristiques avantageuses du mécanisme selon l'invention, prises isolément ou en combinaison :
- Les axes des éléments excentriques sont positionnés à équidistance de l'axe de balancier.
- Les éléments contrarotatifs présentent une même masse et des mêmes dimensions.
- L'axe de balancier et les axes des éléments excentriques sont disposés dans un même plan vertical lorsque le mécanisme est au repos.
- Les éléments excentriques ont une section globalement croissante en s'éloignant de l'axe de rotation.
- Les éléments excentriques sont agencés tels que lorsque le mécanisme est en fonctionnement, les éléments excentriques se croisent en position haute et en position basse.
- Les éléments excentriques sont agencés tels que lorsque le mécanisme est en fonctionnement, les éléments excentriques se croisent en position latérale gauche et en position latérale droite. Avantageusement, les moments de force de pesanteur des éléments excentriques ont une même valeur et un même sens, variables selon leur position angulaire autour des axes ; pour chaque position angulaire des éléments excentriques autour des axes, le mécanisme présente une configuration d'équilibre au repos.
- Un contrepoids est fixé en partie inférieure du balancier et amplifie son basculement en alternance d'un côté puis de l'autre, ce qui amplifie les poussées croisées simultanées du balancier sur les axes des éléments excentriques et la transmission de couple au système de synchronisation.
- Le mécanisme comprend un système de verrouillage actionnable entre : une configuration de blocage des éléments excentriques en position haute, les empêchant de décrire le mouvement de rotation synchronisée contrarotative ; et une configuration de libération des éléments excentriques, leur permettant de décrire le mouvement de rotation synchronisée contrarotative.
- Le système de verrouillage comprend un crochet basculant monté sur le balancier et un élément d'accroche solidaire d'un des éléments excentriques.
- Le système de synchronisation comprend des roues dentées montées sur l'axe de balancier et les axes des éléments excentriques.
- Le système de synchronisation comprend :
   - un premier arbre support monté pivotant sur le balancier, centré sur le premier axe et solidaire du premier élément excentrique,
   - un second arbre support monté pivotant sur le balancier, centré sur le second axe et solidaire du second élément excentrique,
   - une première roue dentée centrale et une première roue dentée intermédiaire solidaires du premier arbre support, la première roue dentée centrale ayant un diamètre et un nombre de dents doubles de ceux de la première roue dentée intermédiaire,
   - une seconde roue dentée centrale et une seconde roue dentée intermédiaire solidaires du second arbre support, la seconde roue dentée centrale engrenant avec la première roue dentée centrale, la seconde roue dentée centrale ayant un diamètre et un nombre de dents égaux à ceux de la première roue dentée centrale et doubles de ceux de la seconde roue dentée intermédiaire,
   - un premier arbre latéral et un deuxième arbre latéral centrés sur l'axe de balancier,
   - une première roue dentée latérale solidaire du premier arbre latéral et engrenant avec la première roue dentée intermédiaire,
   - une seconde roue dentée latérale solidaire du second arbre latéral et engrenant avec la seconde roue dentée intermédiaire,
   où soit le premier arbre latéral soit le deuxième arbre latéral est prévu pour être couplé au système de récupération d'énergie.
- Durant une rotation à 360° des éléments excentriques, entre deux basculements du balancier, les roues dentées reçoivent le couple en étant prises en étau entre les poussées du balancier et la rotation des éléments excentriques, le couple propulsant les éléments excentriques vers le bas en les accélérant, puis vers le haut en s'opposant aux forces de pesanteur.
- Les éléments excentriques sont conformés comme des pâles d'éolienne.

L'invention a également pour objet une machine, caractérisée en ce qu'elle comprend : au moins un mécanisme tel que mentionné ci-dessus, et un système de récupération d'énergie couplé au système de synchronisation.

Selon d'autres caractéristiques avantageuses de la machine selon l'invention, prises isolément ou en combinaison :
- La machine comprend au moins une paire de mécanismes couplés en parallèle ou en série, dont les balanciers basculent en alternance de manière contrarotative l'un par rapport à l'autre.
- Au sein de la paire de mécanismes, toutes les pièces en mouvement d'un premier mécanisme sont contrarotatives par rapport aux pièces en mouvement correspondantes de l'autre mécanisme.
- La paire de mécanismes comprend des éléments excentriques agencés en opposition de phase, tels que lorsque la machine est en fonctionnement, les éléments excentriques d'un premier mécanisme se croisent en position haute tandis que les éléments excentriques d'un second mécanisme se croisent en position basse.
- La paire de mécanismes comprend des éléments excentriques disposés en phase tels que lorsque la machine est en fonctionnement, les éléments excentriques d'un premier mécanisme se croisent en position latérale gauche lorsque les éléments excentriques d'un second mécanisme se croisent en position latérale droite.
- La machine est une machine de production d'énergie, par exemple un moteur ou un générateur. En alternative, la machine peut être un mélangeur, ou tout autre type de machine envisageable.

L'invention a également pour objet un procédé de mise en oeuvre d'un mécanisme tel que mentionné ci-dessus.

Le procédé est caractérisé en ce qu'il comprend :
- une étape de démarrage, consistant à impulser aux éléments excentriques un mouvement de rotation synchronisée contrarotative ;
- une phase de fonctionnement, durant laquelle :
   - les éléments excentriques sont mobiles en rotation synchronisée contrarotative, avec centrifugations croisées,
   - le balancier bascule en alternance d'un côté puis de l'autre, en amplifiant le mouvement de rotation des éléments excentriques, par poussées croisées simultanées du balancier sur les axes desdits éléments excentriques, et par transmission de couple au système de synchronisation, et
   - un système de récupération d'énergie couplé au système de synchronisation récupère l'énergie générée par centrifugation au sein du mécanisme ;
- si besoin durant la phase de fonctionnement, des étapes de relance consistant à impulser un nouvel élan aux éléments excentriques dans leur mouvement de rotation synchronisée contrarotative ; et
en ce que l'énergie récupérée par le système de récupération d'énergie durant la phase de fonctionnement est supérieure à l'énergie dépensée lors de l'étape de démarrage et les étapes de relance.

Selon d'autres caractéristiques particulières du procédé selon l'invention, prises isolément ou en combinaison :
- Durant la phase de fonctionnement, pour chaque tour des éléments excentriques se produisent six centrifugations :
   - une première centrifugation, dite verticale, due à la descente des éléments excentriques ;
   - une deuxième centrifugation, dite horizontale, dû au basculement du balancier sur un premier côté, en poussant sur le premier axe ;
   - une troisième centrifugation, dite horizontale, dû au basculement du balancier sur ce premier côté, en poussant sur le second axe ;
   - une quatrième centrifugation, dite verticale, due à la descente des éléments excentriques ;
   - une cinquième centrifugation, dite horizontale, dû au basculement du balancier sur un deuxième côté, en poussant sur le premier axe en sens opposé à la deuxième centrifugation ;
   - une sixième centrifugation, dite horizontale, dû au basculement du balancier sur ce deuxième côté, en poussant sur le second axe en sens opposé à la deuxième centrifugation ;
   où les deuxième et troisième centrifugations sont simultanées à la fin de première centrifugation et au début de quatrième centrifugation, tandis que les cinquième et sixième centrifugations sont simultanées à la fin de quatrième centrifugation et au début de première centrifugation.
- Durant la phase de fonctionnement, le basculement du balancier augmente l'accélération du mouvement de rotation des éléments excentriques lors de leur descente, puis atténue la décélération du mouvement de rotation des éléments excentriques lors de leur remontée.
- L'étape de démarrage est réalisée par gravité, en libérant les éléments excentriques disposés en position haute.
- L'étape de démarrage est réalisée en utilisant une manivelle couplée au système de synchronisation.
- L'étape de démarrage et/ou les étapes de relance sont réalisées en utilisant un moteur d'entraînement couplé au système de synchronisation.
- L'étape de démarrage est réalisée par simple poussée sur l'un des éléments excentriques.
- Le système de récupération d'énergie comprend une génératrice.
- Le système de récupération d'énergie comprend un moto-générateur, également utilisé pour l'étape de démarrage et/ou les étapes de relance.
- Les éléments excentriques sont conformés comme des pâles d'éolienne, dont la prise au vent est utilisée pour l'étape de démarrage et/ou les étapes de relance.

L'invention sera mieux comprise à la lecture de la description qui va suivre, donnée uniquement à titre d'exemple non limitatif et faite en référence aux dessins annexés sur lesquels :
- la figure 1 est une vue de face d'un mécanisme conforme à l'invention, comprenant un socle, un balancier et deux éléments excentriques, lesquels sont représentés en position basse ;
- la figure 2 est une vue de face partielle du mécanisme, où le balancier est représenté incliné, tandis que les éléments excentriques sont représentés en positions latérales ;
- la figure 3 est une coupe selon la ligne III-III à la figure 1, montrant partiellement le mécanisme, à plus grande échelle ;
- la figure 4 est une coupe selon la ligne IV-IV à la figure 1, montrant un mécanisme conforme à un deuxième mode de réalisation de l'invention ;
- les figures 5 à 12 représentent schématiquement différentes étapes de fonctionnement du mécanisme des figures 1 à 3 ;
- les figures 13 et 14 montrent, en vues de face, deux variantes d'éléments excentriques prévues pour équiper le mécanisme selon l'invention ;
- la figure 15 est une vue de face d'une machine conforme à l'invention, comprenant deux mécanismes couplés en série par une chaine et une bielle ; et
- la figure 16 est une vue analogue à la figure 15, d'une machine conforme à un autre mode de réalisation de l'invention, comprenant deux mécanismes couplés en série, avec un autre système de couplage.

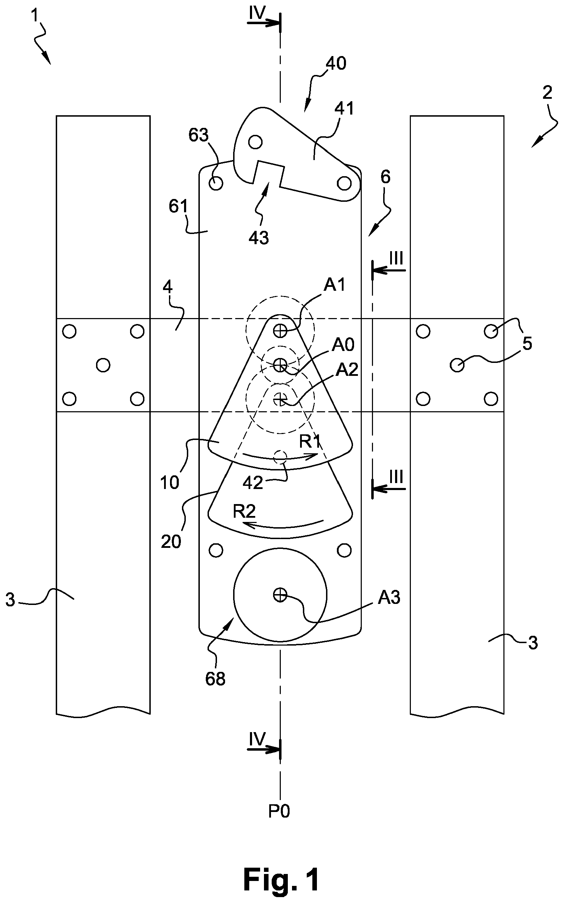

Sur les figures 1 à 3 est représenté un mécanisme 1 à centrifugations croisées conforme à l'invention.

Le mécanisme 1 comprend un socle 2, un balancier 6, un système de synchronisation 8, ainsi que deux éléments excentriques 10 et 20.

Le balancier 6 est mobile en rotation autour d'un axe de balancier A0 solidaire du socle 2, tandis que les éléments excentriques 10 et 20 sont mobiles en rotation autour d'axes A1 et A2 solidaires du balancier 6. Les axes A0, A1 et A2 sont horizontaux, parallèles et disposés dans un même plan P0 solidaire du balancier 6. L'axe A1 de rotation de l'élément 10 est disposé au-dessus de l'axe A0, tandis que l'axe A2 de rotation de l'élément 20 est disposé au-dessous de l'axe A0. Les axes A1 et A2 sont équidistants de l'axe A0.

Le socle 2 comprend quatre montants verticaux 3, deux montants horizontaux 4, et des renforts horizontaux 5. Chaque montant horizontal 4 est supporté par deux montants verticaux 3, formant ainsi deux ensembles de montants 3 et 4 disposés en parallèles et reliés par les renforts horizontaux 5.

Le balancier 6 est positionné verticalement dans l'espace intermédiaire délimité entre les montants 4 et les renforts 5. Le balancier 6 est monté basculant par rapport au socle 2, plus précisément par rapport aux montants 4, autour de l'axe de balancier A0 solidaire des montants 4.

Le balancier 6 comprend quatre plaques métalliques, à savoir deux plaques latérales 61 et deux plaques centrales 62, disposées parallèles entre elles et aux montants 4. Les plaques 61 et 62 sont connectées par des quatre barres horizontales 63, disposées aux quatre coins du balancier 6.

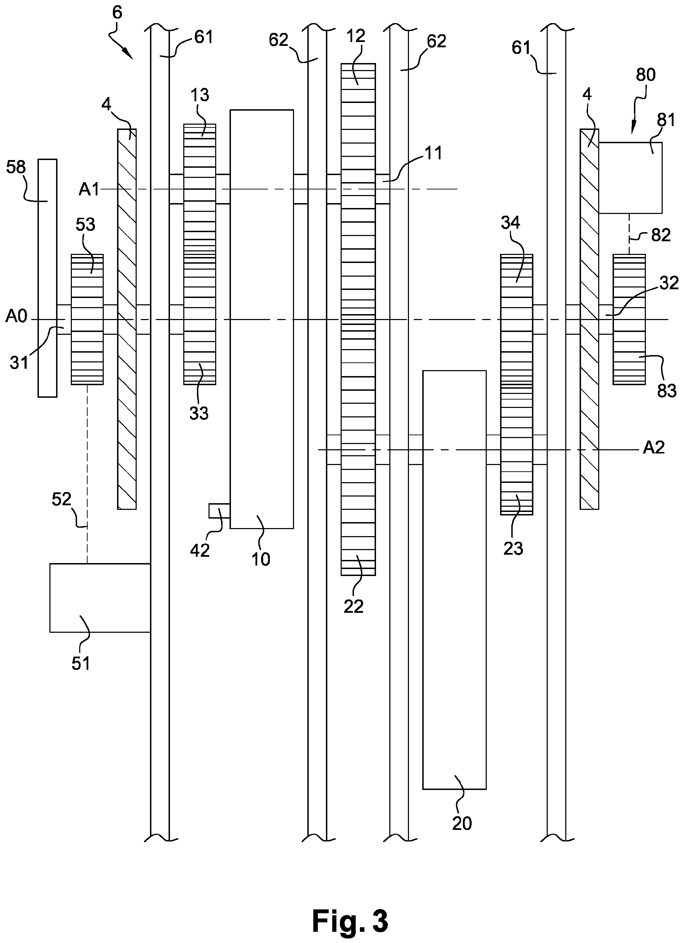

Comme montré à la figure 3, l'axe de balancier A0 est matérialisé par deux arbres latéraux 31 et 32, chacun monté pivotant à travers un montant 4 et une plaque 61.

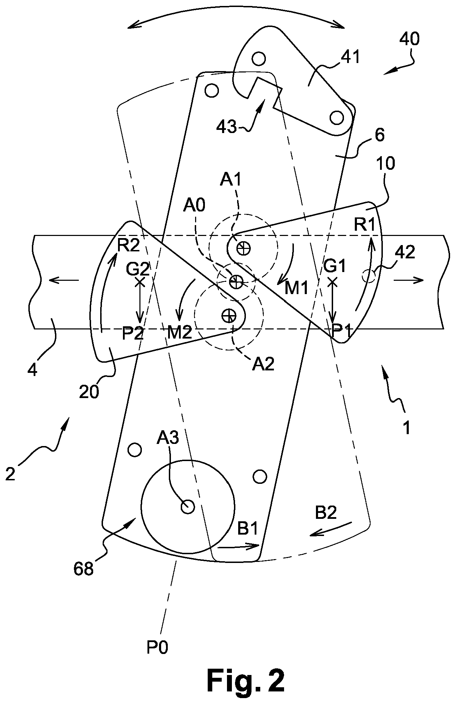

Un contrepoids 68 est fixé en partie inférieure du balancier 6, sur un axe A3 horizontal situé dans le plan P0, parallèle aux axes A0, A1 et A2. Le contrepoids 68 amplifie le basculement du balancier 6, en alternance d'un côté puis de l'autre, comme représenté par les flèches B1 et B2 à la figure 2.

Le système de synchronisation 8 comprend différents éléments 11, 12, 13, 21, 22, 23, 31, 32, 33 et 34 couplés les uns aux autres, comme montré à la figure 3.

Un premier arbre support 11 est monté pivotant sur le balancier 6, centré sur le premier axe A1 et solidaire du premier élément excentrique 10. L'arbre 11 est supporté par une plaque latérale 61 et les deux plaques centrales 62. Une première roue dentée centrale 12 et une première roue dentée intermédiaire 13 sont solidaires du premier arbre support 11.

Un second arbre support 21 est monté pivotant sur le balancier 6, centré sur le second axe A2 et solidaire du second élément excentrique 20. L'arbre 21 est supporté par l'autre plaque latérale 61 et les deux plaques centrales 62. Une seconde roue dentée centrale 22 et une seconde roue dentée intermédiaire 23 sont solidaires du second arbre support 21.

Les roues 12 et 22 ont un même diamètre et un même nombre de dents. De même, les roues 13 et 23 ont un même diamètre et un même nombre de dents. Les roues 12 et 22 ont un diamètre et un nombre de dents doubles de ceux des roues 13 et 23. Par exemple, les roues 12 et 22 ont quarante-huit dents, tandis que les roues 13 et 23 ont vingt-quatre dents.

Les arbres latéraux 31 et 32 sont centrés sur l'axe de balancier A0. Une première roue dentée latérale 33 est solidaire du premier arbre latéral 31. Une seconde roue dentée latérale 34 solidaire du second arbre latéral 32.

Les arbres 11, 21, 31 et 32 sont supportés par des paliers, par exemple des roulements à billes, non représentés dans un but de simplification sur les figures 1 à 3.

Les roues 12 et 22 sont positionnées entre les deux plaques centrales 62 et engrènent l'une avec l'autre. Les roues 13 et 33 sont positionnées avec l'élément 10 entre deux plaques 61 et 62, et engrènent l'une avec l'autre. Les roues 23 et 34 sont positionnées avec l'élément 20 entre les deux autres plaques 61 et 62, et engrènent l'une avec l'autre.

Grâce au système de synchronisation 8, un mouvement synchronisé peut être transmis de l'arbre 31 à l'arbre 32, en passant par les arbres 11 et 21. En pratique, les arbres 11 et 21 tournent à la même vitesse, mais dans des sens de rotation R1 et R2 contraires.

Ainsi, le système de synchronisation 8 permet d'entraîner le premier élément excentrique 10 et le second élément excentrique 20 selon un mouvement de rotation R1 / R2 synchronisée contrarotative.

A titre d'exemple, lorsque le mécanisme 1 est en fonctionnement, la vitesse de rotation R1 / R2 peut être de l'ordre de 500 tours par minute.

Les éléments excentriques 10 et 20 présentent des formes particulières, pensées pour générer des forces centrifuges. A titre d'exemple, les éléments 10 et 20 pèsent chacun 50 kg, tandis que le contrepoids 68 pèse 60 kg. De préférence, la masse des éléments 10 et 20 est égale à la masse du contrepoids 68. Par exemple, les éléments 10 et 20 pèsent chacun 50 kg, tandis que le contrepoids 68 pèse 100 kg.

L'élément 10 a un centre de gravité G1 excentré par rapport à l'axe A1 et est mobile en rotation R1 autour de cet axe A1. L'élément 10 génère un moment M1 de force de pesanteur P1 autour de l'axe A1.

L'élément 20 a un centre de gravité G2 excentré par rapport à l'axe A2 et est mobile en rotation R2 autour de cet axe A2. L'élément 20 génère un moment M2 de force de pesanteur P2 autour de l'axe A2.

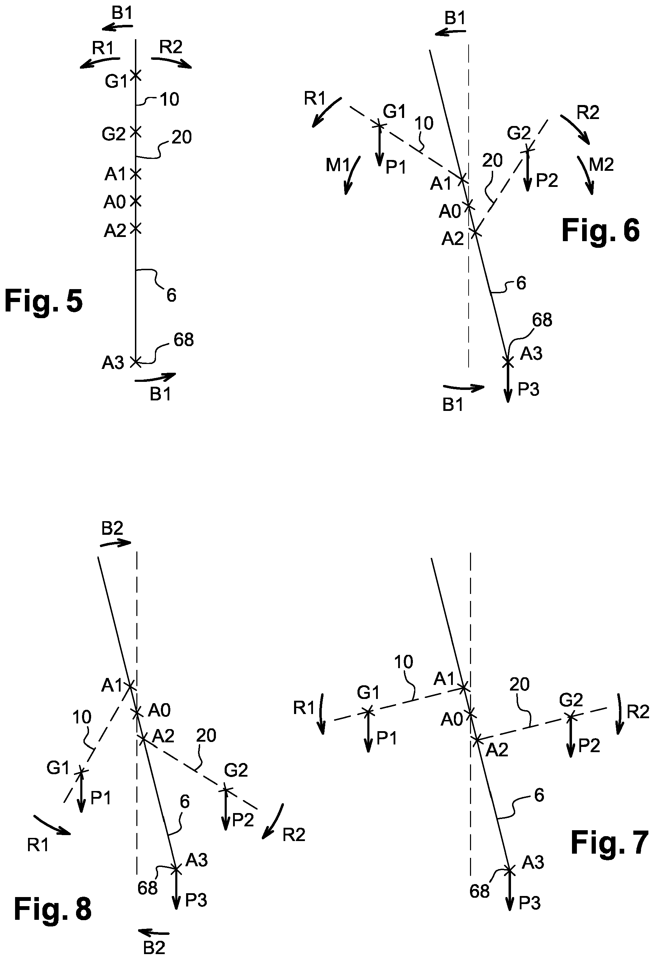

Les centrifugations croisées sont décrites plus en détail ci-après, en référence aux figures 5 à 12.

L'énergie générée par centrifugation au sein du mécanisme 1 est récupérable en couplant un système de récupération d'énergie 80 au système de synchronisation 8.

Sur la figure 3, le système de récupération d'énergie 80 est couplé au système de synchronisation via l'arbre 32.

Le système 80 comprend une génératrice 81, une chaine crantée 82 et une roue dentée 83 fixée sur l'arbre 32. La génératrice 81 est représentée fixée sur un montant 4 dans un but de simplification, mais peut être positionnée en tout autre endroit adapté. La chaine 82 est représentée par un trait en pointillés dans un but de simplification. La chaine 82 relie la roue 83 à la génératrice 81.

Le procédé de mise en oeuvre du mécanisme 1 comprend une étape de démarrage, une phase de fonctionnement, et si besoin, durant la phase de fonctionnement, des étapes de relance.

L'étape de démarrage consiste à impulser le mouvement de rotation R1 / R2 synchronisée contrarotative aux éléments excentriques 10 et 20. Différents moyens de démarrage sont décrits plus loin.

Durant la phase de fonctionnement, les éléments excentriques 10 et 20 sont mobiles en rotation R1 / R2 synchronisée contrarotative, avec centrifugations croisées. Le balancier 6 bascule en alternance B1 / B2 d'un côté puis de l'autre, en amplifiant le mouvement des éléments excentriques 10 et 20, par poussées croisées simultanées du balancier 6 sur les axes A1 et A2, et par transmission de couple aux roues dentées 13 et 23. Le système de récupération d'énergie 80 couplé au système de synchronisation 8 récupère l'énergie générée par centrifugation au sein du mécanisme 1.

Les étapes de relance consistent à impulser un nouvel élan aux éléments excentriques 10 et 20 dans leur mouvement de rotation R1 / R2 synchronisée contrarotative.

Dans le cadre de l'invention, l'énergie récupérée par le système de récupération d'énergie 80 est supérieure à l'énergie dépensée lors de l'étape de démarrage et les étapes de relance.

L'étape de démarrage peut être réalisée par gravité, en libérant les éléments excentriques 10 et 20 disposés en position haute.

A cet effet, le mécanisme 1 peut comprendre un système de verrouillage 40, actionnable entre une configuration de blocage des éléments excentriques 10 et 20 en position haute, et une configuration de libération des éléments excentriques 10 et 20. Dans la configuration de blocage, le système 40 empêche les éléments 10 et 20 de décrire le mouvement de rotation R1 / R2 synchronisée contrarotative. Dans la configuration de libération, le système 40 libère les éléments 10 et 20 qui peuvent alors décrire le mouvement de rotation R1 / R2 synchronisée contrarotative.

Sur l'exemple montré des figures 1 à 3, le système 40 comprend un crochet basculant 41 monté sur le balancier 6 et un organe d'accroche 42 solidaire de l'élément 10, dont l'axe A1 est situé au-dessus des axes A0 et A2. Le crochet 41 comporte un logement 43, dans lequel vient se loger l'organe 42 lorsque l'élément 10 est en position haute.

Le basculement du crochet 41 entre les configurations de blocage et de libération peut être piloté par tous moyens adaptés, non représentés dans un but de simplification. Le crochet 41 est relevé pour libérer l'organe 42 hors du logement 43, autorisant alors la rotation R1 / R2 des éléments 10 et 20. Le crochet 41 est abaissé pour coincer l'organe 42 dans le logement 43 lorsque l'élément 10 passe en position haute, arrêtant ainsi la rotation de l'élément 10 et donc également de l'élément 20.

Selon une variante, l'étape de démarrage peut être réalisée en utilisant une manivelle 58 couplée au système de synchronisation 8. Sur l'exemple de la figure 3, cette manivelle 58 est montée sur l'arbre 31. La manivelle 58 peut notamment être utilisée lorsque les éléments 10 et 20 démarrent en position basse

Selon une autre variante, l'étape de démarrage peut être réalisée en utilisant un moteur d'entraînement 51 couplé au système de synchronisation 8. Sur l'exemple de la figure 3, le moteur 51 est couplé via une chaine crantée 52 à une roue dentée 53 montée sur l'arbre 31. Le moteur 51 est représenté fixé sur un montant 4 dans un but de simplification, mais peut être positionné en tout autre endroit adapté. La chaine 52 est représentée par un trait en pointillés dans un but de simplification. De manière avantageuse, le moteur 51 peut également être utilisé pour les étapes de relance.

Selon d'autres variantes de réalisation particulières du mécanisme 1, il peut être envisagé de réaliser l'étape de démarrage par simple poussée sur l'un des éléments excentriques 10 et 20.

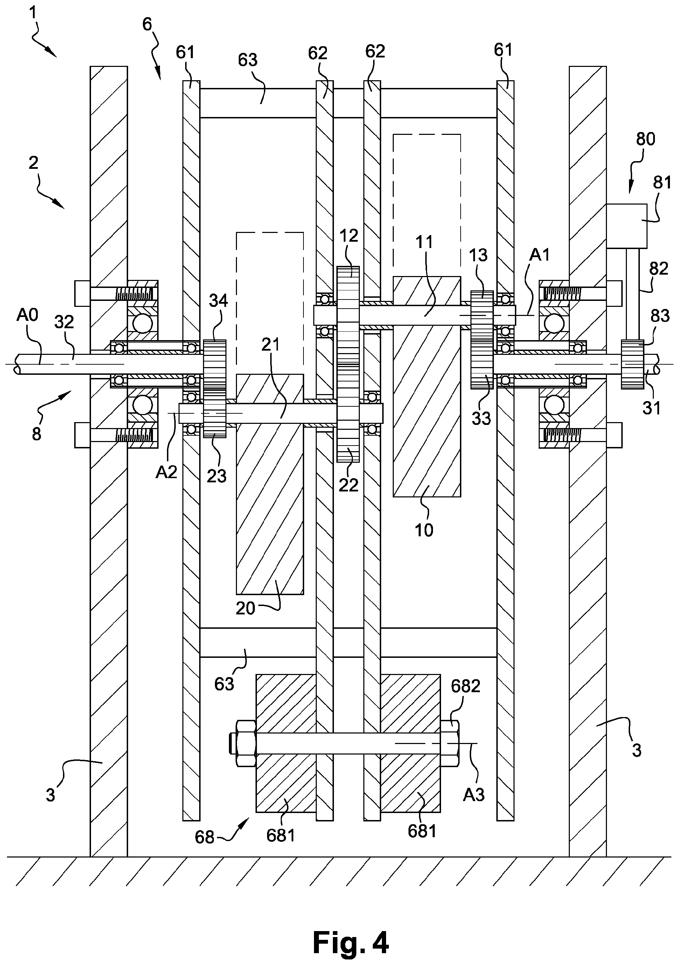

Sur la figure 4 est représenté un mécanisme 1 conforme à un deuxième mode de réalisation de l'invention.

Le socle 2 comporte des montants verticaux 3 supportant les axes 31 et 32 en rotation autour de l'axe de balancier A0. Le système de récupération d'énergie 80 comprend un moto-générateur 81, adapté pour remplir à la fois une fonction de moteur et de générateur. Ainsi, le moto-générateur 81 peut également être utilisé pour l'étape de démarrage et/ou les étapes de relance du mécanisme 1.

Le contrepoids 68 comprend deux poids 681 positionnés contre la face externe des plaques centrales 62, ainsi qu'un ensemble vis-écrou 682 permettant de fixer les poids 681 en position. L'ensemble vis-écrou 682 traverse les plaques 62 et les poids 682 selon l'axe A3 parallèle aux axes A0, A1 et A2.

Excepté ces différences, le fonctionnement du mécanisme 1 de la figure 4 est similaire au fonctionnement du mécanisme 1 des figures 1 à 3.

Sur les figures 5 à 12 sont représentées différentes étapes de fonctionnement du mécanisme 1 des figures 1 à 3.

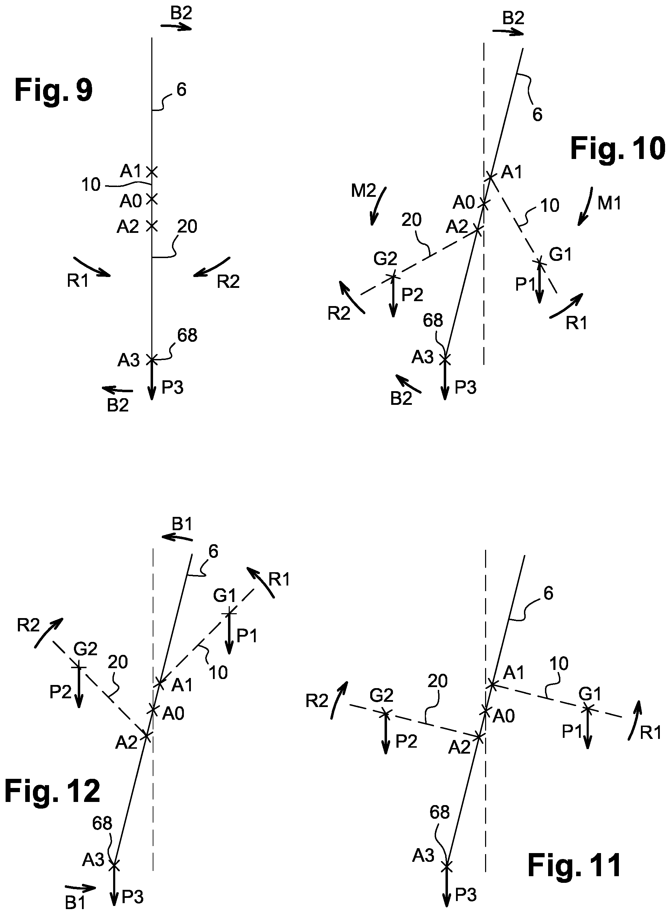

Dans cet exemple, comme montré à la figure 5, les éléments 10 et 20 sont initialement en position haute. Les figures 6 à 8 montrent la descente des éléments 10 et 20. La figure 9 montre les éléments 10 et 20 en position basse. Les figures 10 à 11 montrent la remontée des éléments 10 et 20. Les rotations R1 et R2 sont contrarotatives. Les éléments 10 et 20 se croisent en position basse et haute.

L'élément 10 est soumis à une force de pesanteur P1 s'exerçant au niveau de son centre de gravité G1. L'élément 20 est soumis à une force de pesanteur P2 s'exerçant niveau de son centre de gravité G2. Le contrepoids 68 est soumis à une force de pesanteur P3 s'exerçant niveau de l'axe A3.

Les figures 5 et 6 montrent le démarrage du mécanisme 1, alors que les éléments 10 et 20 sont initialement en position haute. Dans cet exemple, l'élément 10 débute son mouvement de rotation R1 vers la gauche tandis que l'élément 20 débute son mouvement de rotation R2 vers la droite. Comme le centre de gravité G1 de l'élément 10 est plus éloigné de l'axe de balancier A0 que le centre de gravité G2 de l'élément 20, le contrepoids 68 est entraîné en basculement B1 vers la droite.

La figure 6 monte le mécanisme 1 en cours de basculement B1 et en début de descente. A cet instant, compte tenu des positions respectives du balancier 6 et des éléments 10 et 20, l'énergie potentielle de l'élément 10 est supérieure à l'énergie potentielle de l'élément 20.

Le basculement B1 pousse simultanément l'axe A1 sur la gauche et l'axe A2 sur la droite. Cela augmente la distance parcourue par le centre de gravité G1, et donc augmente l'énergie cinétique de l'élément 10. En revanche, cela réduit la distance parcourue par le centre de gravité G2, et donc réduit l'énergie cinétique de l'élément 20. Le balancier 6 transmet de l'énergie centrifuge aux éléments 10 et 20 par basculement B1, en plus de leur propre énergie centrifuge par rotation R1 / R2.

Egalement, le basculement B1 produit des effets au niveau de l'engrènement des roues dentées 13 et 33 et de l'engrènement des roues dentées 23 et 34. Plus précisément, le balancier 6 transmet un couple positif aux roues dentées 13 et 33, et un couple négatif aux roues dentées 23 et 34. Cela augmente encore l'énergie cinétique de l'élément 10, et réduit encore l'énergie cinétique de l'élément 20.

Comme ses énergies potentielle et cinétique sont supérieures, l'élément 10 a une influence prédominante au sein du mécanisme 1. On remarque que les vitesses de rotation R1 et R2 sont forcément égales compte tenu du système de synchronisation 8. Ainsi, le basculement B1 augmente l'accélération des mouvements de rotation R1 et R2.

La figure 7 montre le premier instant où les centres de gravité G1 et G2 sont équidistants de l'axe de balancier A0. Le basculement du balancier 6 est sur le point de s'inverser. A cet instant, les éléments 10 et 20 ont la même énergie potentielle.

Les figures 8 à 10 montrent la fin de descente et le début de remontée des éléments 10 et 20. Comme le centre de gravité G2 de l'élément 20 est plus éloigné de l'axe de balancier A0 que le centre de gravité G1 de l'élément 10, le contrepoids 68 est entraîné en basculement B2 vers la gauche.

Compte tenu des positions respectives du balancier 6 et des éléments 10 et 20, l'énergie potentielle de l'élément 20 est supérieure à l'énergie potentielle de l'élément 10.

Le basculement B2 pousse simultanément l'axe A1 sur la droite et l'axe A2 sur la gauche. Cela réduit la distance parcourue par le centre de gravité G1, et donc réduit l'énergie cinétique de l'élément 10. En revanche, cela augmente la distance parcourue par le centre de gravité G2, et donc augmente l'énergie cinétique de l'élément 20.

Egalement, le basculement B2 produit des effets au niveau de l'engrènement des roues dentées 13 et 33 et de l'engrènement des roues dentées 23 et 34. Plus précisément, le balancier 6 transmet un couple négatif aux roues dentées 13 et 33, et un couple positif aux roues dentées 23 et 34. Cela augmente encore l'énergie cinétique de l'élément 20, et réduit encore l'énergie cinétique de l'élément 10.

Comme ses énergies potentielle et cinétique sont supérieures, l'élément 20 a une influence prédominante au sein du mécanisme 1. Ainsi, le basculement B2 augmente l'accélération des rotations R1 / R2 lors de la descente des éléments 10 et 20, puis atténue la décélération des rotations R1 / R2 lors de la montée des éléments 10 et 20. Le balancier 6 transmet de l'énergie centrifuge aux éléments 10 et 20 par basculement B2, en plus de leur propre énergie centrifuge par rotation R1 / R2.La figure 11 montre le deuxième instant où les centres de gravité G1 et G2 sont équidistants de l'axe de balancier A0. Le basculement du balancier 6 est sur le point de s'inverser. A cet instant, les éléments 10 et 20 ont la même énergie potentielle.

La figure 12 puis les figures 5 et 6 montrent la fin de remontée et le début de descente des éléments 10 et 20. Comme le centre de gravité G1 de l'élément 10 est plus éloigné de l'axe de balancier A0 que le centre de gravité G2 de l'élément 20, le contrepoids 68 est entraîné en basculement B1 vers la droite. Le basculement B1 atténue la décélération des rotations R1 / R2 lors de la montée des éléments 10 et 20.

Durant le fonctionnement du mécanisme 1, une énergie centrifuge maximale est générée lors de la descente des éléments 10 et 20, comme montré aux figures 5 à 9. Lorsque les moments M1 / M2 sont dans le même sens que les rotations R1 / R2, alors ces moments M1 / M2 font accélérer les rotations R1 / R2.

Le basculement B1 / B2 en alternance du balancier 6 accompagne les éléments 10 et 20 au cours de leur mouvement de rotation R1 / R2 synchronisée contrarotative. Plus précisément, le basculement R1 / R2 amplifie le mouvement de rotation R1 / R2 des éléments 10 et 20, par poussées croisées simultanées sur leurs axes A1 et A2, et par transmission de couple au système 8. Le basculement B1 / B2 augmente l'accélération des rotations R1 / R2 lors de la descente des éléments 10 et 20, puis atténue la décélération des rotations R1 / R2 lors de la montée des éléments 10 et 20. Le balancier 6 transmet de l'énergie centrifuge aux éléments 10 et 20 par basculement B1 / B2, en plus de leur propre énergie centrifuge par rotation R1 / R2. Le couple transmis au système 8 propulse les éléments 10 et 20, vers le bas en les accélérant, puis vers le haut en s'opposant aux forces de pesanteur P1 / P2.

En pratique, on peut distinguer six centrifugations pour chaque tour à 360° des éléments excentriques 10 et 20 :
- une première centrifugation, dite verticale, due à la descente des éléments excentriques 10 et 20 ;
- une deuxième centrifugation, dite horizontale, dû au basculement B1 du balancier 6 sur un premier côté, en poussant sur le premier axe A1 ;
- une troisième centrifugation, dite horizontale, dû au basculement B1 du balancier 6 sur ce premier côté, en poussant sur le second axe A2 ;
- une quatrième centrifugation, dite verticale, due à la descente des éléments excentriques 10 et 20 ;
- une cinquième centrifugation, dite horizontale, dû au basculement B2 du balancier 6 sur un deuxième côté, en poussant sur le premier axe A1 en sens opposé à la deuxième centrifugation ; et
- une sixième centrifugation, dite horizontale, dû au basculement B2 du balancier 6 sur ce deuxième côté, en poussant sur le second axe A2 en sens opposé à la deuxième centrifugation.

Les deuxième et troisième centrifugations sont simultanées à la fin de première centrifugation et au début de quatrième centrifugation, tandis que les cinquième et sixième centrifugations sont simultanées à la fin de quatrième centrifugation et au début de première centrifugation.

Lorsque le mécanisme 1 est en fonctionnement à une vitesse de rotation R1 / R2 égale à 500 tours par minute, cela donne 3000 centrifugations par minute.

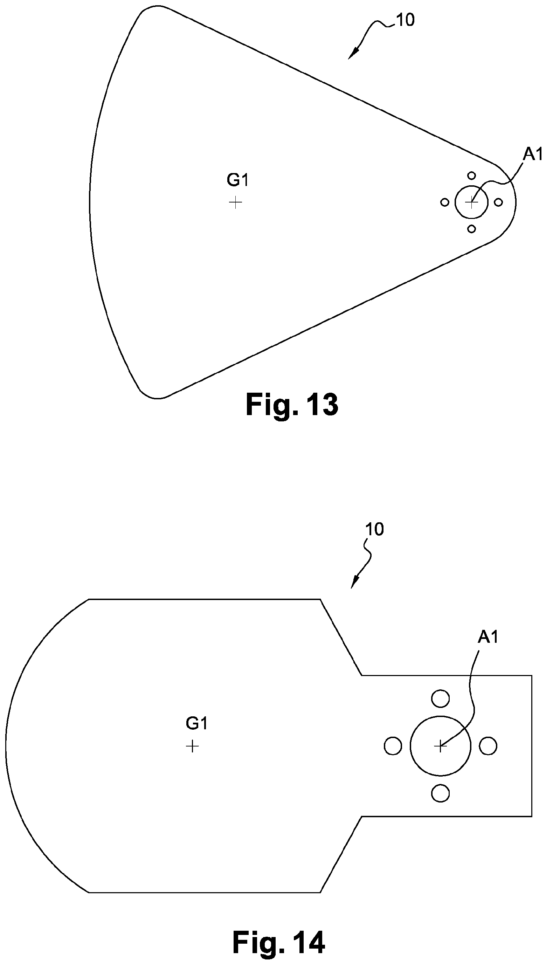

Sur les figures 13 et 14 sont représentées deux variantes d'éléments excentriques 10 conçues pour équiper le mécanisme 1 selon l'invention.

Ces éléments excentriques 10 et 20 ont une section globalement croissante en s'éloignant de l'axe A1, de manière à éloigner le centre de gravité G1 par rapport à l'axe A1, et ainsi augmenter l'énergie centrifuge générée lors de la rotation R1. Ces formes offrent un bon compromis entre résistance mécanique, fonctionnalité en mouvement et performance pour l'énergie centrifuge.

Les éléments 10 et 20 peuvent présenter d'autres formes sans sortir du cadre de l'invention.

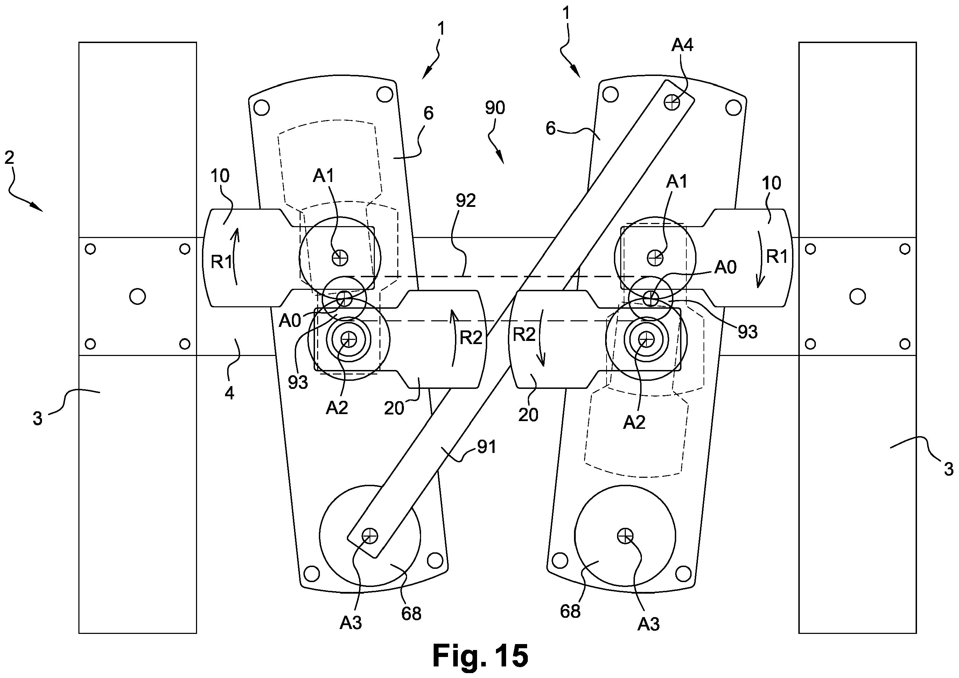

Sur la figure 15 est représentée une machine conforme à l'invention, comprenant deux mécanismes 1 tels que décrits plus haut, couplés en série.

Les mécanismes 1 comprennent chacun un balancier 6, et partagent le même socle 2 supportant les deux balanciers 6. Les mécanismes 1 sont équipés d'éléments excentriques 10 et 20 conformes à la figure 14.

Les mécanismes 1 sont couplés via un système de couplage 90 comprenant une bielle 91, une chaine crantée 92 et deux roues dentées 93.

La bielle 91 est articulée sur un mécanisme 1 au niveau de l'axe A3 du contrepoids 68 en partie basse, et sur l'autre mécanisme 1 au niveau d'un axe A4 situé en partie haute, à la même distance de l'axe A0 que l'axe A3 en partie basse.

La chaine 92 s'étend entre deux roues dentées 93 disposées en vis-à-vis. Pour chaque mécanisme 1, la roue dentée 93 peut être montée sur l'arbre 31 ou 32, ou éventuellement sur l'arbre 11 ou 21.

Lorsque la machine est en fonctionnement, les balanciers 6 suivent des mouvements de basculement B1 / B2 contrarotatifs. Leurs parties supérieures se rapprochent lorsque leurs parties inférieures s'éloignent, et inversement.

En outre, les éléments 10 et 20 d'un mécanisme 1 se croisent en position haute lorsque que les éléments 10 et 20 de l'autre mécanisme 1 se croisent en position basse. Autrement dit, les éléments 10 et 20 d'un mécanisme 1 sont disposés en opposition de phase par rapport aux éléments 10 et 20 de l'autre mécanisme 1. Ainsi, lorsque les éléments 10 et 20 d'un mécanisme 1 descendent et génèrent une énergie centrifuge maximale, les éléments 10 et 20 de l'autre mécanisme 1 sont en train de monter. Autrement dit, la montée des éléments 10 et 20 d'un mécanisme 1 est toujours facilitée par la descente des éléments 10 et 20 de l'autre mécanisme 1. Le démarrage de la machine est facilité, et l'énergie centrifuge récupérable est encore améliorée.

Toutes les pièces en mouvement des mécanismes 1 oscillatoires sont contrarotatives. Les deux balanciers 6 sont couplés contrarotatifs, avec deux oscillations à chaque tour. Ainsi, une vitesse de rotation de 500 tours/minute équivaut à 1000 oscillations/minute.

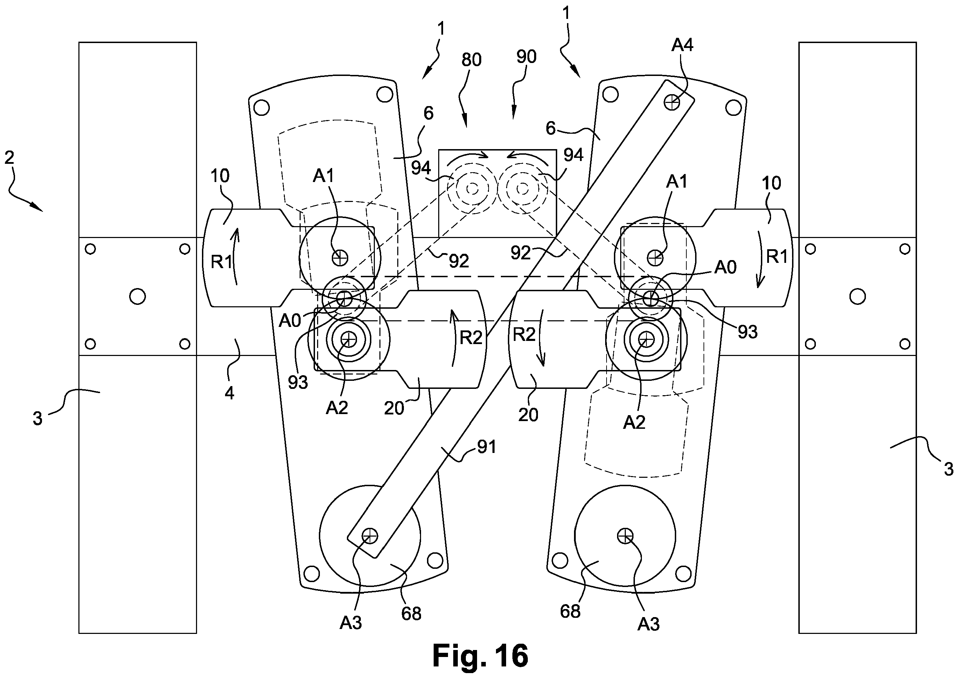

Sur la figure 16 est représentée une autre machine conforme à l'invention, comprenant deux mécanismes 1 tels que décrits plus haut, couplés en série.

Le système de couplage 90 des mécanismes 1 comprend une bielle 91, deux chaines crantées 92, deux roues dentées 93 et deux roues dentées 94. Le système 90 comprend une chaine 92, une roue 93 et une roue 94 pour chaque mécanisme 1.

La bielle 91 est articulée sur un mécanisme 1 au niveau d'un axe A4 situé en partie haute, et sur l'autre mécanisme 1 au niveau de l'axe A3 situé en partie basse.

Chaque chaine 92 s'étend entre une roue dentée 93 montée sur le balancier 6, plus précisément sur l'arbre 11, 21, 31 ou 32, et une roue dentée 94 montée sur le socle 2, plus précisément sur un montant horizontal 4.

Le système de récupération d'énergie 80 peut comprendre un moto-générateur, couplé à l'axe supportant l'une des roues 94.

En alternative, le système 80 peut comprendre une génératrice couplée à un axe supportant l'une des roues 94, tandis qu'un moteur est couplé à l'autre axe supportant l'autre roue 94.

Par ailleurs, le mécanisme 1 ou la machine comportant au moins un mécanisme 1 peuvent être conformés différemment des figures 1 à 16 sans sortir du cadre de l'invention.

Selon un exemple de variante non représentée, le mécanisme 1 peut comporter des éléments excentriques 10 et 20 conformés comme des pâles d'éolienne. L'énergie centrifuge et l'énergie éolienne se cumulent lorsque le mécanisme 1 est en fonctionnement. La prise au vent des éléments 10 et 20 peut être avantageusement utilisée pour l'étape de démarrage et/ou les étapes de relance du mécanisme 1.

Selon une autre variante non représentée, le mécanisme 1 peut être dépourvu de contrepoids 68. Cette variante peut notamment être intéressante pour les mécanismes 1 équilibrés, dans la mesure où elle permet de gagner en vitesse et d'augmenter l'énergie cinétique des mécanismes 1.

En outre, les caractéristiques techniques des différents modes de réalisation et variantes mentionnés ci-dessus peuvent être, en totalité ou pour certaines d'entre elles, combinées entre elles. Ainsi, le mécanisme 1 et la machine peuvent être adaptés, dans le cadre des revendications annexées, en termes de coût, de fonctionnalités et de performance.

## Revendications

1. Mécanisme (1), comprenant :
- un socle (2) ;
- un balancier (6) monté basculant par rapport au socle (2) autour d'un axe de balancier (A0);
- un premier élément excentrique (10) générant un premier moment (M1) de force de pesanteur (P1) autour d'un premier axe (A1);
- un second élément excentrique (20) générant un second moment (M2) de force de pesanteur (P2) autour d'un second axe (A2) ; et
- un système de synchronisation (8) du premier élément excentrique (10) et du second élément excentrique (20) selon un mouvement de rotation (R1 ; R2) synchronisée contrarotative ;
dans lequel:
- l'axe de balancier (A0) et les axes (A1 ; A2) des éléments excentriques (10 ; 20) sont parallèles et disposés dans un même plan (P0) solidaire du balancier (6) ;
- les axes (A1 ; A2) des éléments excentriques (10 ; 20) sont supportés par le balancier (6) ; et
- lorsque le mécanisme (1) est en fonctionnement :
- les axes (A1 ; A2) des éléments excentriques (10 ; 20) sont supportés par le balancier (6), respectivement en dessus et en dessous de l'axe de balancier (A0) ;
- les éléments excentriques (10 ; 20) sont mobiles en rotation (R1 ; R2) synchronisée contrarotative, avec centrifugations croisées,
- le balancier (6) bascule en alternance (B1 ; B2) d'un côté puis de l'autre, en amplifiant le mouvement de rotation (R1 ; R2) des éléments excentriques (10 ; 20), par poussées croisées simultanées du balancier (6) sur les axes (A1 ; A2) desdits éléments excentriques (10 ; 20), et par transmission de couple au système de synchronisation (8), et
- l'énergie générée par centrifugation au sein du mécanisme (1) est récupérable en couplant un système de récupération d'énergie (80) au système de synchronisation (8).

2. Mécanisme (1) selon la revendication 1, **caractérisé en ce que** les axes (A1 ; A2) des éléments excentriques (10 ; 20) sont positionnés à équidistance de l'axe de balancier (A0).

3. Mécanisme (1) selon l'une des revendications précédentes 1 ou 2, **caractérisé en ce que** les éléments excentriques (10 ; 20) ont une section globalement croissante en s'éloignant de l'axe (A1 ; A2) de rotation (R1 ; R2).

4. Mécanisme (1) selon l'une des revendications précédentes 1 à 3, **caractérisé en ce que** les éléments excentriques (10 ; 20) sont agencés tels que lorsque le mécanisme (1) est en fonctionnement, les éléments excentriques (10 ; 20) se croisent en position haute et en position basse.

5. Mécanisme (1) selon l'une des revendications précédentes 1 à 3, **caractérisé en ce que** les éléments excentriques (10 ; 20) sont agencés tels que lorsque le mécanisme (1) est en fonctionnement, les éléments excentriques (10 ; 20) se croisent en position latérale gauche et en position latérale droite.

6. Mécanisme (1) selon l'une des revendications précédentes 1 à 5, **caractérisé en ce qu'**un contrepoids (68) est fixé en partie inférieure du balancier (6) et amplifie son basculement en alternance (B1 ; B2) d'un côté puis de l'autre, ce qui amplifie les poussées croisées simultanées du balancier (6) sur les axes (A1 ; A2) des éléments excentriques (10 ; 20) et la transmission de couple au système de synchronisation (8).

7. Mécanisme (1) selon l'une des revendications précédentes 1 à 6, **caractérisé en ce qu'**il comprend un système de verrouillage (40) actionnable entre :
- une configuration de blocage des éléments excentriques (10 ; 20) en position haute, les empêchant de décrire le mouvement de rotation (R1 ; R2) synchronisée contrarotative ; et
- une configuration de libération des éléments excentriques (10 ; 20), leur permettant de décrire le mouvement de rotation (R1 ; R2) synchronisée contrarotative.

8. Mécanisme (1) selon la revendication 7, **caractérisé en ce que** le système de verrouillage (40) comprend un crochet basculant (41) monté sur le balancier (6) et un élément d'accroche (42) solidaire d'un des éléments excentriques (10 ; 20).

9. Mécanisme (1) selon l'une des revendications précédentes 1 à 8, **caractérisé en ce que** le système de synchronisation (8) comprend des roues dentées (12, 13 ; 22, 23 ; 33, 34).

10. Mécanisme (1) selon l'une des revendications précédentes 1 à 9, **caractérisé en ce que** le système de synchronisation (8) comprend :
- un premier arbre support (11) monté pivotant sur le balancier (6), centré sur le premier axe (A1) et solidaire du premier élément excentrique (10),
- un second arbre support (21) monté pivotant sur le balancier (6), centré sur le second axe (A2) et solidaire du second élément excentrique (20),
- une première roue dentée centrale (12) et une première roue dentée intermédiaire (13) solidaires du premier arbre support (11), la première roue dentée centrale (12) ayant un diamètre et un nombre de dents doubles de ceux de la première roue dentée intermédiaire (13),
- une seconde roue dentée centrale (22) et une seconde roue dentée intermédiaire (23) solidaires du second arbre support (21), la seconde roue dentée centrale (22) engrenant avec la première roue dentée centrale (12), la seconde roue dentée centrale (22) ayant un diamètre et un nombre de dents égaux à ceux de la première roue dentée centrale (12) et doubles de ceux de la seconde roue dentée intermédiaire (23),
- un premier arbre latéral (31) et un deuxième arbre latéral (32) centrés sur l'axe de balancier (A0),
- une première roue dentée latérale (33) solidaire du premier arbre latéral (31) et engrenant avec la première roue dentée intermédiaire (13),
- une seconde roue dentée latérale (34) solidaire du second arbre latéral (32) et engrenant avec la seconde roue dentée intermédiaire (23),
où soit le premier arbre latéral (31) soit le deuxième arbre latéral (32) est prévu pour être couplé au système de récupération d'énergie (80).

11. Mécanisme (1) selon l'une des revendications 9 ou 10, **caractérisé en ce que** durant une rotation (R1 ; R2) à 360° des éléments excentriques (10 ; 20), entre deux basculements du balancier (6), les roues dentées (12, 13, 22, 23 ; 33, 34) reçoivent le couple en étant prises en étau entre les poussées du balancier (6) et la rotation (R1 ; R2) des éléments excentriques (10 ; 20), le couple propulsant les éléments excentriques (10 ; 20) vers le bas en les accélérant, puis vers le haut en s'opposant aux forces de pesanteur (P1 ; P2).

12. Mécanisme (1) selon l'une des revendications précédentes 1 à 11, **caractérisé en ce que** les éléments excentriques (10 ; 20) sont conformés comme des pâles d'éolienne.

13. Machine, **caractérisée en ce qu'**elle comprend :
- au moins un mécanisme (1) selon l'une des revendications précédentes 1 à 12, et
- un système de récupération d'énergie (80) couplé au système de synchronisation (8).

14. Machine selon la revendication 13, **caractérisée en ce qu'**elle comprend au moins une paire de mécanismes (1) couplés en parallèle ou en série, dont les balanciers (6) basculent en alternance (B1 ; B2) de manière contrarotative.

15. Procédé de mise en oeuvre d'un mécanisme (1) selon l'une des revendications 1 à 12, **caractérisé en ce que** le procédé comprend :
- une étape de démarrage, consistant à impulser aux éléments excentriques (10 ; 20) un mouvement de rotation (R1 ; R2) synchronisée contrarotative ;
- une phase de fonctionnement, durant laquelle :
- les éléments excentriques (10 ; 20) sont mobiles en rotation (R1 ; R2) synchronisée contrarotative, avec centrifugations croisées,
- le balancier (6) bascule en alternance (B1 ; B2) d'un côté puis de l'autre, en amplifiant le mouvement de rotation (R1 ; R2) des éléments excentriques (10 ; 20), par poussées croisées simultanées du balancier (6) sur les axes (A1 ; A2) desdits éléments excentriques (10 ; 20), et par transmission de couple au système de synchronisation (8), et
- un système de récupération d'énergie (80) couplé au système de synchronisation (8) récupère l'énergie générée par centrifugation au sein du mécanisme (1) ;
- si besoin durant la phase de fonctionnement, des étapes de relance consistant à impulser un nouvel élan aux éléments excentriques (10 ; 20) dans leur mouvement de rotation (R1 ; R2) synchronisée contrarotative ; et
**en ce que** l'énergie récupérée par le système de récupération d'énergie (80) est supérieure à l'énergie dépensée lors de l'étape de démarrage et les étapes de relance.

## Patentansprüche

1. Mechanismus (1), umfassend:
- einen Sockel (2);
- eine Unruh (6), bezogen auf den Sockel (2) um eine Unruhachse (A0) schwenkbar montiert,
- ein erstes exzentrisches Element (10), das ein erste Schwerkraft (P1) - Moment (M1) um eine erste Achse (A1) erzeugt;
- ein zweites exzentrisches Element (20), das ein zweite Schwerkraft (P2) - Moment (M2) um eine zweite Achse (A2) erzeugt; und
- ein System zur Synchronisierung (8) des ersten exzentrischen Elementes (10) und des zweiten exzentrischen Elementes (20), entsprechend einer Drehbewegung (R1, R2), gegenläufig synchronisiert;
in dem:
- die Unruhachse (A0) und die Achsen (A1, A2) der exzentrischen Elemente (10, 20) parallel und in derselben Ebene (P0), verbunden mit der Unruh (6), angeordnet sind
- die Achsen (A1, A2), die exzentrischen Elemente (10, 20) von der Unruh (6) gehalten werden; und
- wenn der Mechanismus (1) in Betrieb ist,
- werden die Achsen (A1, A2) der exzentrischen Elemente (10, 20) von der Unruh (6), jeweils über und unter der Unruhachse (A0) gehalten;
- sind die exzentrischen Elemente (10, 20) gegenläufig synchronisiert drehbar (R1, R2), mit überkreuzten Zentrifugationen,
- kippt die Unruh (6) abwechselnd (B1, B2) nach der einen, dann der anderen Seite, mit Verstärkung der Drehbewegung (R1, R2) der exzentrischen Elemente (10, 20) durch überkreuzte, simultane Stöße der Unruh (6) auf die Achsen (A1, A2) dieser exzentrischen Elemente (10, 20) und durch Übertragung des Momentes auf das Synchronisationssystem (8); und
- kann die durch Zentrifugation innerhalb des Mechanismus (1) erzeugte Energie zurückgewonnen werden, in dem ein Energierückgewinnungssystem (80) mit dem Synchronisationssystem (8) verbunden wird.

2. Mechanismus (1) gemäß Anspruch 1, **dadurch gekennzeichnet, dass** die Achsen (A1, A2) der exzentrischen Elemente (10, 20) in gleichem Abstand von der Unruhachse (A0) angeordnet sind.

3. Mechanismus (1) gemäß einem der vorhergehenden Ansprüche 1 oder 2, **dadurch gekennzeichnet, dass** die exzentrischen Elemente (10, 20) einen allgemein wachsenden Querschnitt haben, je mehr sie von der Dreh- (R1 ; R2) Achse (A1, A2) entfernt sind.

4. Mechanismus (1) gemäß einem der vorhergehenden Ansprüche 1 bis 3, **dadurch gekennzeichnet, dass** die exzentrischen Elemente (10, 20) so angeordnet sind, dass wenn der Mechanismus (1) in Betrieb ist, die exzentrischen Elemente (10, 20) sich in der oberen und unteren Position überkreuzen.

5. Mechanismus (1) gemäß einem der vorhergehenden Ansprüche 1 bis 3, **dadurch gekennzeichnet, dass** die exzentrischen Elemente (10, 20) so angeordnet sind, dass wenn der Mechanismus (1) in Betrieb ist, die exzentrischen Elemente (10, 20) sich in der den seitlichen Position jeweils links und rechts überkreuzen.

6. Mechanismus (1) gemäß einem der vorhergehenden Ansprüche 1 bis 5, **dadurch gekennzeichnet, dass** ein Gegengewicht (68) am unteren Teil der Unruh (6) befestigt ist und ihr alternierendes Kippen (B1, B2) zur einen dann zur anderen Seite verstärkt, was die überkreuzten Stöße der Unruh (6) auf die Achsen (A1, A2) der exzentrischen Elemente (10, 20) und die Übertragung des Momentes auf das Synchronisationssystem (8) verstärkt.

7. Mechanismus (1) gemäß einem der vorhergehenden Ansprüche 1 bis 6, **dadurch gekennzeichnet, dass** er ein Verriegelungssystem (40) umfasst, das geschaltet werden kann zwischen:
- einer Konfiguration in der die exzentrischen Elemente (10, 20) in der oberen Position blockiert sind, die sie hindert, die gegenläufig synchronisierte Drehbewegung (R1; R2) auszuführen; und
- einer Konfiguration in der die exzentrischen Elemente (10, 20) gelöst sind und in der sie die gegenläufig synchronisierte Drehbewegung (R1; R2) ausführen können.

8. Mechanismus (1) gemäß Anspruch 7, **dadurch gekennzeichnet, dass** das Verriegelungssystem (40) einen schwenkbaren Haken (41), montiert auf der Unruh (6) enthält sowie ein Einhängelement (42), das mit einem der exzentrischen Elemente (10, 20) fest verbunden ist.

9. Mechanismus (1) gemäß einem der vorhergehenden Ansprüche 1 bis 8, **dadurch gekennzeichnet, dass** das Synchronisationssystem (8) Zahnräder (12, 13; 22, 23; 33, 34) umfasst.

10. Mechanismus (1) gemäß einem der vorhergehenden Ansprüche 1 bis 9, **dadurch gekennzeichnet, dass** das Synchronisationssystem (8) umfasst:
- eine erste Tragwelle (11), schwenkbar montiert auf der Unruh (6), zentriert auf der ersten Achse (A1) und fest verbunden mit dem ersten exzentrischen Element (10),
- eine zweite Tragwelle (21), schwenkbar montiert auf der Unruh (6), zentriert auf der zweiten Achse (A2) und fest verbunden mit dem zweiten exzentrischen Element (20),
- ein erstes zentrales Zahnrad (12) und ein erstes Zwischenzahnrad (13), verbunden mit der erste Tragwelle (11), das erste zentrale Zahnrad (12) hat den doppelten Durchmesser und Zahnzahl wie das erste Zwischenzahnrad (13),
- ein zweites zentrales Zahnrad (22) und ein zweites Zwischenzahnrad (23), fest verbunden mit der zweiten Tragwelle (21), das zweite zentrale Zahnrad (22), das in das erste zentrale Zahnrad (12) greift, wobei das zweite zentrale Zahnrad (22) einen Durchmesser und eine Zahnzahl gleich dem ersten zentralen Zahnrad (12) und das Doppelte des zweiten Zwischenzahnrads (23) hat;
- eine erste Seitenwelle (31) und eine zweite Seitenwelle (32), zentriert auf der Unruhachse (A0),
- ein erstes seitliches Zahnrad (33), verbunden mit der ersten Seitenwelle (31) und das in das erste Zwischenzahnrad (13) greift,
- ein zweites seitliches Zahnrad (34), verbunden mit der zweiten Seitenwelle (32) und das in das zweite Zwischenzahnrad (23) greift,
oder entweder die erste Seitenwelle (31) oder die zweite Seitenwelle (32) dafür vorgesehen ist, mit dem Energierückgewinnungssystem (80) verbunden zu werden.

11. Mechanismus (1) nach einem der Ansprüche 9 oder 10, **dadurch gekennzeichnet, dass** während einer Rotation (R1 ; R2) um 360° der exzentrischen Elemente (10, 20) zwischen zwei Kippvorgängen der Unruh (6), die Zahnräder (12, 13, 22, 23 ; 33, 34) das Drehmoment aufnehmen, da sie sich als Amboss zwischen den Stößen der Unruh (6) und der Rotation (R1 ; R2) der exzentrischen Elemente (10, 20) befinden, wobei das Moment die exzentrischen Elemente (10, 20) nach unten drückt, indem es sie beschleunigt und dann nach oben, indem es der Schwerkraft (P1; P2).entgegenwirkt.

12. Mechanismus (1) gemäß einem der vorhergehenden Ansprüche 1 bis 11, **dadurch gekennzeichnet, dass** die exzentrischen Elemente (10, 20) ausgeführt sind wie Windturbinenflügel.

13. Maschine, **dadurch gekennzeichnet, dass** sie umfasst:
- mindestens einen Mechanismus (1) gemäß einem der vorhergehenden Ansprüche 1 bis 12 und
- ein Energierückgewinnungssystem (80), verbunden mit dem Synchronisationssystem (8)

14. Maschine gemäß Anspruch 13, **dadurch gekennzeichnet, dass** er mindestens ein Paar Mechanismen (1) umfasst, parallel oder in Serie gekoppelt, deren Unruhen (6) alternierend gegenläufig kippen (B1, B2).

15. Verfahren zur Umsetzung eines Mechanismus (1) nach einem der Ansprüche 1 bis 12, **dadurch gekennzeichnet, dass** das Verfahren umfasst:
- einen Schritt des Anlassens, der darin besteht den exzentrischen Elementen (10, 20) Anstöße zu einer synchronisierten gegenläufigen Drehbewegung (R1; R2) geben.
- eine Betriebsphase, in der:
- die exzentrischen Elemente (10, 20) drehbar (R1, R2) beweglich sind, gegenläufig synchronisiert, mit überkreuzten Zentrifugationen,
- die Unruh (6) kippt abwechselnd (B1, B2) nach der einen, dann der anderen Seite, mit Verstärkung der Drehbewegung (R1, R2) der exzentrischen Elemente (10, 20) durch überkreuzte, simultane Stöße der Unruh (6) auf die Achsen (A1, A2) dieser exzentrischen Elemente (10, 20) und durch Übertragung des Momentes auf das Synchronisationssystem (8); und
- ein Energierückgewinnungssystem (80), verbunden mit dem Synchronisationssystem (8), das die Energie zurückgewinnt, die durch Zentrifugation innerhalb des Mechanismus (1) erzeugt wird;
- wenn während der Betriebsphase nötig bestehen die Erholungsphasen darin, den exzentrischen Elementen (10, 20) neuen Schwung bei ihrer synchronisierten gegenläufigen Drehbewegung (R1; R2) zu geben; und
- darin, dass die vom Energierückgewinnungssystem (80) zurückgewonnene Energie höher ist als die Energie, die während der Anlassphasen und den Erholungsphasen aufgewendet wird.

## Claims

1. Mechanism (1), comprising:
- a base (2);
- a pendulum (6) mounted pivotally in relation to the base (2) about a pendulum axis (A0);
- a first eccentric element (10) generating a first moment (M1) of gravitational force (P1) about a first axis (A1);
- a second eccentric element (20) generating a second moment (M2) of gravitational force (P2) about a second axis (A2); and
- a synchronization system (8) for synchronizing the first eccentric element (10) and the second eccentric element (20) according to a synchronized counter-rotating rotational movement (R1/R2).
wherein:
- the pendulum axis (A0) and the axes (A1; A2) of the eccentric elements (10; 20) are parallel and arranged in a same plane (P0) integral to the pendulum (6);
- the axes (A1; A2) of the eccentric elements (10; 20) are supported by the pendulum (6) ; and
- when the mechanism (1) is in operation:
- the axes (A1; A2) of the eccentric elements (10; 20) are supported by the pendulum (6), respectively above and below the pendulum axis (A0); and
- the eccentric elements (10; 20) are movable in synchronized counter-rotating rotation (R1; R2), with cross-centrifugations,
- the pendulum (6) pivots alternately (B1; B2) on one side then the other, amplifying the rotational movement (R1; R2) of the eccentric elements (10; 20), by means of simultaneous cross-thrusts of the pendulum (6) against the axes (A1; A2) of said eccentric elements (10; 20), and by the transmission of torque to the synchronization system (8), and
- the energy generated by centrifugation within the mechanism (1) is recoverable by coupling an energy recovery system (80) to the synchronization system (8).

2. Mechanism (1) according to claim 1, **characterized in that** the axes (A1; A2) of the eccentric elements (10; 20) are positioned equidistant from the pendulum axis (A0).

3. Mechanism (1) according to one of the preceding claims 1 to 2, **characterized in that** the eccentric elements (10; 20) have a generally increasing cross-section as the distance from the axis (A1; A2) of rotation (R1; R2) increases.

4. Mechanism (1) according to one of the preceding claims 1 to 3, **characterized in that** the eccentric elements (10; 20) are arranged such that when the mechanism (1) is in operation, the eccentric elements (10; 20) intersect at a high position and at a low position.

5. Mechanism (1) according to one of the preceding claims 1 to 3, **characterized in that** the eccentric elements (10; 20) are arranged such that when the mechanism (1) is in operation, the eccentric elements (10; 20) intersect at a left lateral position and at a right lateral position.

6. Mechanism (1) according to one of the preceding claims 1 to 5, **characterized in that** a counterweight (68) is attached at the lower part of the pendulum (6) and amplifies the alternate pivoting (B1; B2) thereof on one side then on the other, which amplifies the simultaneous cross-thrusts of the pendulum (6) against the axes (A1; A2) of the eccentric elements (10; 20) and the transmission of torque to the synchronization system (8).

7. Mechanism (1) according to one of the preceding claims 1 to 6, **characterized in that** it comprises a locking system (40) operable between:
- a configuration for locking the eccentric elements (10; 20) in the high position, preventing them from describing the synchronized counter-rotating rotational movement (R1; R2); and
- a configuration for releasing the eccentric elements (10 20), allowing them to describe the synchronized counter-rotating rotational movement (R1 R2).

8. Mechanism (1) according to claim 7, **characterized in that** the locking system (40) comprises a pivoting hook (41) mounted on the pendulum (6) and a hooking element (42) integral to one of the eccentric elements (10; 20).

9. Mechanism (1) according to one of the preceding claims 1 to 8, **characterized in that** the synchronization system (8) comprises gearwheels (12, 13; 22, 23; 33, 34).

10. Mechanism (1) according to one of the preceding claims 1 to 9, **characterized in that** the synchronization system (8) comprises:
- a first support shaft (11) mounted pivotally on the pendulum (6), centered on the first axis (A1) and integral to the first eccentric element (10),
- a second support shaft (21) mounted pivotally on the pendulum (6), centered on the second axis (A2) and integral to the second eccentric element (20),
- a first central gearwheel (12) and a first intermediate gearwheel (13) integral to the first support shaft (11), the first central gearwheel (12) having a diameter and a number of teeth double that of the first intermediate gearwheel (13),
- a second central gearwheel (22) and a second intermediate gearwheel (23) integral to the second support shaft (21), the second central gearwheel (22) meshing with the first central gearwheel (12), the second central gearwheel (22) having a diameter and number of teeth equal to that of the first central gearwheel (12) and double that of the second intermediate gearwheel (23),
- a first lateral shaft (31) and a second lateral shaft (32) centered on the pendulum axis (A0),
- a first lateral gearwheel (33) integral to the first lateral shaft (31) and meshing with the first intermediate gearwheel (13),
- a second lateral gearwheel (34) integral to the second lateral shaft (32) and meshing with the second intermediate gearwheel (23),
where either the first lateral shaft (31) or the second lateral shaft (32) is intended to be coupled to the energy recovery system (80).

11. Mechanism (1) according to one of the claims 9 or 10, **characterized in that** during one 360° rotation (R1; R2) of the eccentric elements (10; 20), between two oscillations of the pendulum (6), the gearwheels (12, 13, 22, 23 33, 34) receive the torque captured between the thrusts of the pendulum (6) and the rotation (R1; R2) of the eccentric elements (10; 20), the torque propelling the eccentric elements (10; 20) downwards accelerating them, then upwards in opposing the gravitational forces (P1; P2).

12. Mechanism (1) according to one of the preceding claims 1 to 11, **characterized in that** the eccentric elements (10; 20) are in the shape of wind turbine blades.

13. Machine, **characterized in that** it comprises:
- at least one mechanism (1) according to one of the preceding claims 1 to 12, and
- an energy recovery system (80) coupled to a synchronization system (8).

14. Machine according to claim 13, **characterized in that** it comprises at least one pair of mechanisms (1) coupled together in parallel or series, wherein the pendulums (6) alternately pivot (B1; B2) in a counter-rotating manner.

15. Method for implementing a mechanism (1) according to one of the claims 1 to 12, **characterized in that** the method comprises:
- a startup step, for imparting a synchronized counter-rotating rotational movement (R1; R2) to the eccentric elements (10; 20);
- an operating phase, during which:
- the eccentric elements (10; 20) are movable in synchronized counter-rotating rotation (R1; R2), with cross-centrifugations,
- the pendulum (6) pivots alternately (B1; B2) on one side then the other, amplifying the rotational movement (R1; R2) of the eccentric elements (10; 20), by means of simultaneous cross-thrusts of the pendulum (6) against the axes (A1; A2) of said eccentric elements (10; 20), and by the transmission of torque to the synchronization system (8), and
- an energy recovery system (80) coupled to the synchronization system (8) recovers energy generated by centrifugation within the mechanism (1);
- if necessary during the operating phase, restarting steps consisting in imparting new momentum to the eccentric elements (10; 20) within the counter-rotating rotational movement (R1; R2) thereof; and
**in that** the energy recovered by the energy recovery system (80) is greater than the energy expended during the startup step and the restarting steps.
